# EUROPÄISCHE PATENTSCHRIFT

(11) **EP 3 752 309 B1**
(45) Veröffentlichungstag und Bekanntmachung des Hinweises auf die Patenterteilung: **01.07.2026**
(21) Anmeldenummer: 19706435.5
(22) Anmeldetag: 13.02.2019
(51) Int. Cl.: B22F 10/25, B22F 10/31, B22F 12/41, B22F 12/44, B22F 12/53, B22F 12/90, B33Y 10/00, B33Y 30/00, B22F 12/47, B22F 12/55

(54) **ANORDNUNG ZUR JUSTIERUNG EINER PULVERSTRÖMUNG IN BEZUG ZUR MITTLEREN LÄNGSACHSE EINES ENERGIESTRAHLS**
ARRANGEMENT FOR ADJUSTING A POWDER FLOW IN RELATION TO THE CENTRAL LONGITUDINAL AXIS OF AN ENERGY BEAM
SYSTÈME D'AJUSTEMENT D'UN ÉCOULEMENT DE POUDRE PAR RAPPORT À L'AXE LONGITUDINAL CENTRAL D'UN RAYON D'ÉNERGIE

(30) Priorität: 13.02.2018 DE 102018202203
(43) Veröffentlichungstag der Anmeldung: 23.12.2020
(73) Patentinhaber: Fraunhofer-Gesellschaft zur Förderung der angewandten Forschung e.V., 80686 München (DE); Technische Universität Dresden, 01069 Dresden (DE)
(72) Erfinder: RIEDE, Mirko, 01705 Freital (DE); BRÜCKNER, Frank, 01217 Dresden (DE); HEMSCHIK, Rico, 01848 Hohenstein (DE); WILLNER, Robin, 01277 Dresden (DE)
(74) Vertreter: Pfenning, Meinig & Partner mbB
(86) Internationale Anmeldenummer: PCT/EP2019/053541
(87) Internationale Veröffentlichungsnummer: WO 2019/158580

(56) Entgegenhaltungen:
- DE-A1- 102004 051 876
- US-A- 5 396 333
- US-A- 6 046 426
- US-A1- 2016 318 130
- US-A1- 2017 239 724
- US-B2- 6 476 343

## Beschreibung

Die Erfindung betrifft eine Anordnung nach dem Oberbegriff des Anspruch 1. Das Pulverauftragsschweißen ist ein Verfahren mit dem Beschichtungen auf Oberflächen von Werkstücken ausgebildet werden können, um beispielsweise Beschichtungen mit bestimmten vorteilhaften Eigenschaften zu erhalten oder einen verschleißbedingten Werkstoffabtrag auf Bauteilen zu kompensieren. Mit Pulverauftragsschweißverfahren können aber auch dreidimensionale Bauteile oder Konturen ausgebildet werden.

Dabei wird pulverförmiger in der Regel metallischer Werkstoff eingesetzt und mit der Energie eines Energiestrahls, in den meisten Fällen der Energie eines Laserstrahles aufgeschmolzen, so dass nach dem Erstarren des Werkstoffs die Beschichtung oder die dreidimensionale Kontur bei mehrfacher Beschichtung übereinander ausgebildet werden kann.

Pulverförmige Werkstoffe sind kostenintensiv, so dass Pulververluste vermieden und eine maximale Ausnutzung von gefördertem pulverförmigem Werkstoff angestrebt wird.

Üblicherweise werden Arbeitsköpfe, in denen eine Pulverförderung, eine Pulverzuführung und optische Komponenten für die Beeinflussung eines Laserstrahls als Energiestrahl aufgenommen sind, eingesetzt.

Ein Energiestrahl wird dabei üblicherweise zentrisch durch den Arbeitskopf und senkrecht in Richtung auf eine Oberfläche, auf der ein Werkstoffauftrag erfolgen soll, gerichtet. Aus Effektivitätsgründen wird pulverförmiger Werkstoff so zugeführt, dass er von allen Seiten und dabei möglichst gleichzeitig von außen in den Einflussbereich des Energiestrahls zugeführt wird. Es ist eine ringförmige den Energiestrahl umschließende Zuführung dabei bevorzugt.

Dazu sind Pulverzuführungen so ausgebildet, dass pulverförmiger Werkstoff über eine ringförmige Spaltdüse, eine Mehrzahl an ringförmig angeordneten Düsen oder gegenüberliegend angeordnete und aufeinander zu gerichtete Düsen in einem Bereich zugeführt wird, der oberhalb der Ebene angeordnet ist, in der der eigentliche Werkstoffauftrag mit dem erstarrten Werkstoff erfolgen soll. Dazu wird üblicherweise eine ringförmige Spaltdüse eingesetzt, die konisch in Richtung der Ebene, in der der eigentliche Werkstoffauftrag mit dem erstarrten Werkstoff erfolgen soll, ausgebildet ist. Mehrere ringförmig angeordnete Düsen können entsprechend dem Konus geneigt ausgerichtet sein. Es können auch mindestens zwei sich gegenüberliegend angeordnete in einem Winkel geneigt und mit ihrer Austrittsöffnung zueinander weisende Düsen an einer Pulverzuführung genutzt werden.

Dadurch strömt so gefördertes Pulver aus der/den Düsen und Partikel des pulverförmigen Werkstoffs aus mehreren Richtungen in einem spitzen Winkel in einen Bereich aufeinander zu. Dieser Bereich ist oberhalb einer Oberfläche angeordnet, auf der ein Werkstoffauftrag erfolgt. In diesem Bereich erfolgt auch eine Wechselwirkung infolge der Absorption der Energiestrahlung an den einzelnen Partikeln, die sich dadurch teilweise bis oberhalb der Schmelztemperatur erwärmen und im erzeugten Schmelzbad flüssiger Werkstoff auf die Oberfläche auf der ein Werkstoffauftrag erfolgen soll auftrifft und dort erstarrt.

Im Bereich der Wechselwirkung des Pulvers mit dem Energiestrahl, wird das Pulver vorgewärmt und anschließend im durch den Energiestrahl erzeugten Schmelzbad absorbiert. Die Position des Laserstrahls korreliert zur Position des Schmelzbades.

Bei einer solchen konzentrischen Pulverzuführung in den Einflussbereich des Energiestrahls, in dem die Wechselwirkung erfolgt, ist es von Bedeutung, dass symmetrische Verhältnisse eingehalten werden. Dies betrifft insbesondere die Ausrichtung der mittleren Längsachse des Energiestrahls. Bei einem Laserstrahl ist dies die optische Achse. Die mittlere Längsachse soll dabei im Zentrum bzw. mittig in diesem Bereich angeordnet sein. Bereits bei kleinen seitlichen Verschiebungen der mittleren Längsachse des Energiestrahls aus dem Zentrum des Bereichs in dem die Partikel des zugeführten pulverförmigen Werkstoffs aufeinandertreffen, kommt es zu einer Verschlechterung der Qualität des aufgebrachten Werkstoffs oder zu Haftungsproblemen. Außerdem wirkt sich diese Verschiebung dadurch nachteilig aus, dass ein kleinerer Anteil des zugeführten Pulvers im Schmelzbad absorbiert wird und damit für den Werkstoffauftrag genutzt werden kann und sich dadurch die Beschichtungs- bzw. Auftragsrate verringert. Es treten also Pulververluste auf, die man vermeiden möchte.

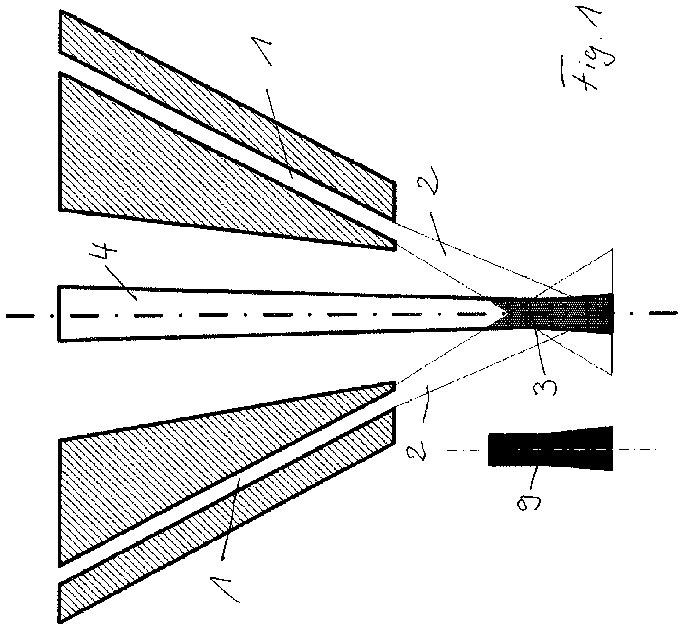

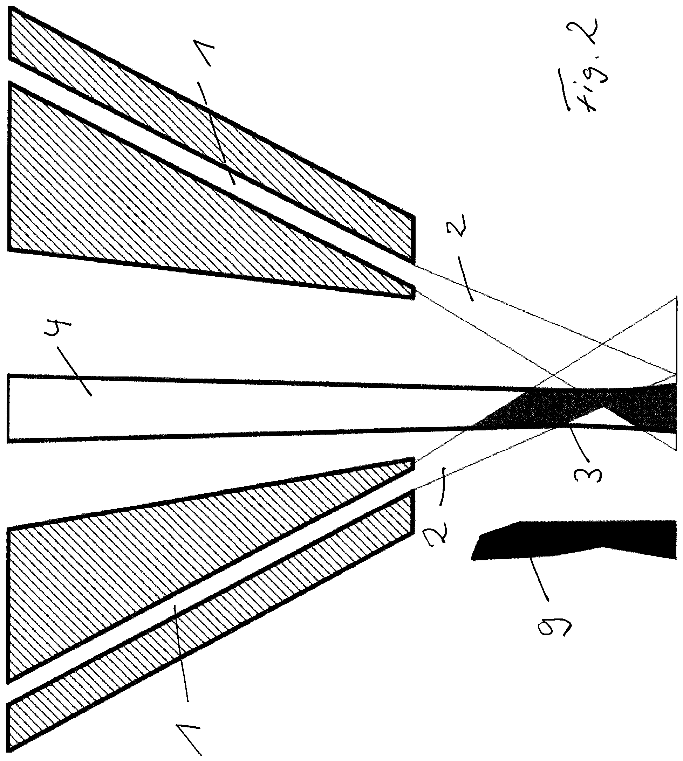

In den Figuren 1 und 2 ist in schematischer Form in einer Schnittdarstellung gezeigt, wie eine Pulverzuführung zentriert erfolgt (Figur 1) und wie ein Versatz der Pulverzuführung in Bezug zur mittleren Längsachse eines Energiestrahls 4 auftreten kann. Die Auswirkung kann man insbesondere in dem Bereich 3 erkennen. So kann man Figur 2 entnehmen, wie sich ein seitlicher Versatz der Pulverzuführung nach rechts auswirkt. Der Energiestrahl 4 trifft an seiner linken Seite zu einem früheren Zeitpunkt auf geförderte Partikel des pulverförmigen Werkstoffs, als dies an der hier rechten Seite der Fall ist. Es kommt daher zu einer deutlich inhomogeneren Erwärmung des in den Bereich 3 geförderten Pulvers, als dies bei der zentrischen Zuführung gemäß Figur 1, der Fall ist. Zusätzlich wird eine geringere Anzahl der durch den Energiestrahl vorgewärmten Partikel im Schmelzbad aufgenommen.

Bisher wurde diesem Problem durch manuelle Einflussnahme bei einer Justierung und die optische und subjektiv eingefärbte Bewertung durch einen Bediener entgegen getreten, so dass Fehler nicht ausgeschlossen werden konnten und insbesondere keine vergleichbaren Justierungsergebnisse über längere Zeiträume oder bei Veränderung der Prozessbedingungen erhalten werden konnten.

So ist aus US 5 396 333 A sind eine Vorrichtung und ein Verfahren zur Überwachung und Analyse eines Materialstroms bekannt.

US 6 046 426 A betrifft ein Verfahren und ein System zur Herstellung komplexgestalteter Objekte.

Es ist daher Aufgabe der Erfindung, Möglichkeiten für eine verbesserte und insbesondere objektiv und vergleichbar durchführbare Justierung anzugeben, die auch für eine automatisierte Lösung anwendbar sind.

Erfindungsgemäß wird diese Aufgabe mit einer Anordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Anordnung zur Justierung einer Pulverströmung in Bezug zur mittleren Längsachse eines Energiestrahls, insbesondere eines Laserstrahls für einen Arbeitskopf, der zum Pulverauftragsschweißen ausgebildet ist, wird die Pulverströmung mittels einer an der einem Werkstück zugewandten Seite des Arbeitskopfes angeordneten Pulverzuführung, die mit einer konisch in Richtung Werkstück ausgebildeten Ringspaltdüse, mehreren ringförmig angeordneten Düsen oder mindestens zwei sich gegenüberliegend angeordnete in einem Winkel geneigt und mit ihrer Austrittsöffnung zueinander weisende Düsen gebildet und so ausgebildet ist, dass die Partikel des pulverförmigen Werkstoffs aus mehreren Richtungen in einem spitzen Winkel in einem Bereich, der oberhalb einer Oberfläche angeordnet ist, auf der mit der Energie des Energiestrahls geschmolzener pulverförmiger Werkstoff aufgebracht werden soll, aufeinandertreffen, realisiert.

Der Energiestrahl ist zur Ebene, auf die der geschmolzene pulverförmige Werkstoff aufgebracht werden soll, ausgerichtet. Die Ausrichtung erfolgt bevorzugt senkrecht zu dieser Ebene.

Am Arbeitskopf ist eine Einrichtung zur zweidimensionalen Ausrichtung der Pulverzuführung in Bezug zur mittleren Längsachse des Energiestrahls, insbesondere der optischen Achse eines Laserstrahls, in einer senkrecht zur mittleren Längsachse des Energiestrahls ausgerichteten Ebene vorhanden.

Von einer Strahlungsquelle ausgehend ist elektromagnetische Strahlung von einer Seite auf den Bereich, in dem die Partikel des pulverförmigen Werkstoffs aufeinander treffen, als linienförmiger Strahl gerichtet. In einer Ebene, die senkrecht zum linienförmigen Strahl ausgerichtet ist, ist ein optisches Detektorarray angeordnet, das bevorzugt ein Kamerasystem sein kann.

Das optische Detektorarray ist zur ortsaufgelösten Erfassung von Intensitäten elektromagnetischer Strahlung ausgebildet und an eine elektronische Auswerteeinheit angeschlossen. Dabei ist die elektronische Auswerteeinheit zur Bestimmung der Form, Größe und/oder Länge eines bestrahlten Bereiches ausgebildet, in dem ortsaufgelöst Intensitäten, die einen vorgebbaren Schwellwert überschreiten mit dem optischen Detektorarray erfasst worden sind.

Der bestrahlte Bereich reicht ausgehend von den Oberflächen von Partikeln des pulverförmigen Werkstoffs auf die der Energiestrahl, der mit reduzierter Leistung bei der Justierung betrieben ist, auftrifft, bis in einen Teilbereich des bestrahlten Bereichs, der in Richtung einer Werkstückoberfläche beschleunigten pulverförmigen Partikel angeordnet ist, in dem sich die mit dem Energiestrahl erwärmten Partikel divergent bewegen. Dieser auswertbare Bereich ist ähnlich eines fokussierten Laserstrahls im Bereich seiner Brennpunktebene, was die Bewegung der Partikel des pulverförmigen Werkstoffs betrifft, ausgebildet. Die Partikel bewegen sich dabei zumindest ähnlich wie fokussierte elektromagnetische Strahlung. Sie bilden in der Brennpunktebene und in deren Nähe die kleinste Querschnittsfläche, die sich vor dem Auftreffen auf die Brennpunktebene verkleinert und im Anschluss an die Brennpunktebene infolge Divergenz wieder vergrößert. Dabei vergrößert sich die Querschnittsfläche mit sich von der Brennpunktebene vergrößerndem Abstand quadratisch.

Der bestrahlte Bereich sollte zumindest so groß, bevorzugt größer sein, als der Bereich in dem Partikel aus verschiedenen Richtungen aufeinander treffen und sich dann nicht divergent auseinander bewegen und/oder die Größe der Fläche, die mit dem optischen Detektorarray erfassbar ist.

Die Strahlungsquelle sollte elektromagnetische Strahlung in einem Wellenlängenintervall emittieren und/oder zwischen dem bestrahlten Bereich und dem Detektorarray ein Bandpassfilter, das für ein Wellenlängenintervall transparent ist, angeordnet sein. Das jeweilige Wellenlängenintervall sollte bevorzugt im Bereich 700 nm bis 1200 nm und besonders bevorzugt in einem Wellenlängenbereich zwischen 715 nm und 780 nm. liegen. Dadurch können Streu- und Reflexionseinflüsse bei der Detektion vermieden bzw. erheblich reduziert werden. Die Wellenlänge eines Laserstrahls, der als Energiestrahl eingesetzt ist, sollte auch außerhalb dieses Wellenlängenintervalls liegen. Die Wellenlänge(n) des linienförmigen Strahls sollte(n) innerhalb dieses Wellenlängenintervalls liegen.

Während der Justierung wird der Energiestrahl mit reduzierter Leistung, bevorzugt mit maximal 50 % der für das Pulverauftragschweißen genutzten Leistung, besonders bevorzugt mit typischerweise maximal 15 % dieser Leistung betrieben werden. Vorteilhaft sollte die Leistung dabei nur so hoch gewählt werden, dass sich Pulverpartikel infolge der vom Energiestrahl an die Partikel übertragenen Energie soweit erwärmen, dass elektromagnetische Strahlung aus dem Wellenlängenintervall, das für die Strahlungsquelle des Energiestrahls gewählt worden oder für das das Bandpassfilter ausgelegt worden ist, von den mit dem Energiestrahl beeinflussten Partikeln emittiert wird. Ein Schmelzen von Partikeln sollte während einer Justierung vermieden werden.

Besonders vorteilhaft sollte die Strahlungsquelle mit dem linienförmigen Strahl parallel zur Ebene in der das Detektorarray angeordnet ist, bewegbar sein. Die ortsaufgelöste Erfassung und Auswertung der Intensitäten während der Bewegung sollte dabei zumindest im Bereich des Zentrums des Bereichs, in dem die Partikel des pulverförmigen Werkstoffs aufeinander treffen, mit der entsprechend ausgebildeten elektronischen Auswerteeinheit durchgeführt werden. Dies ist auch das Zentrum in dem der Energiestrahl in exakt justierter Position und Ausrichtung für das Pulverauftragschweißen eingesetzt werden soll. Selbstverständlich kann eine Erfassung auch in anderen Positionen bei der Bewegung dieser Strahlungsquelle durchgeführt werden, wodurch die gewünschte Position im Zentrum, bei der in jedem Fall eine Auswertung der ortsaufgelöst erfassten Intensitäten erfolgen soll, genauer bestimmt werden kann. In dieser zentralen Position weist der bestrahlte und mit dem Detektorarray erfasste Bereich seine kleinste Ausdehnung auf.

Die elektronische Auswerteeinheit kann eine optische und/oder akustische Anzeigeeinheit, die für eine manuelle Justierung mit der Einrichtung zur zweidimensionalen Ausrichtung der Pulverzuführung nutzbar ist, sein. Dabei kann einem Bediener aufgezeigt werden in welche Richtung und wie weit eine Bewegung an dieser Einrichtung für eine exakte Justierung erforderlich sind. Allein oder zusätzlich dazu kann die elektronische Auswerteeinheit so ausgebildet sein, dass eine geregelte automatisierte Justierung der Einrichtung zur zweidimensionalen Ausrichtung der Pulverzuführung erreichbar ist. Dazu ist es vorteilhaft, wenn die Einrichtung zur zwei - oder dreidimensionalen Ausrichtung der Pulverzuführung in Bezug zur mittleren Längsachse des Energiestrahls mit zwei unabhängig voneinander in zwei senkrecht zueinander ausgerichtete Richtungen bewegbaren Plattformen gebildet ist, an denen die Pulverzuführung und/oder eine den Energiestrahl parallel zu seiner mittleren Längsachse verschiebenden Optik fixiert ist. Die zwei Plattformen sollten jeweils mit einem Antrieb, bevorzugt einem Linearantrieb und besonders bevorzugt mit einem Schrittmotor bewegbar und von der elektronischen Auswerteeinheit ansteuerbar sein. Dann kann die elektronische Auswerteeinheit die jeweiligen Antriebe entsprechend beeinflussen, um eine optimale Justierung erreichen zu können.

Die Plattformen können bevorzugt mit einem dritten Antrieb auch in einer senkrecht zu den vorab erläuterten Richtungen ausgerichteten Achsrichtung (z-Achsrichtung) für eine dreidimensionale Justierung bewegbar sein.

Die elektronische Auswerteeinheit kann auch so ausgebildet sein, dass der Intensitätswertwert einzelner erfassten Bildpunkte oder die Anzahl der erfassten Bildpunkte, bei denen der vorgebbare Intensitätsschwellwert überschritten wurde, die innerhalb des bestrahlten Bereiches erfasst worden sind, bestimmt und ausgewertet werden. Dabei kann eine Über- oder Unterschreitung einer Anzahl von Bildpunkten im gesamten bestrahlten Bereich oder auch in Teilbereichen des bestrahlten Bereichs als Aussage für die Durchführung einer ggf. erforderlichen Justierung herangezogen werden. Bei der Justierung erfolgt eine Relativbewegung der Pulverzuführung mit der einen oder mit mehreren Düse(n) aus der/denen pulverförmiger Werkstoff austritt in Bezug zur mittleren Längsachse des jeweiligen Energiestrahls mittels einer dafür ausgebildeten Einrichtung. In der Regel wird die Position der Pulverzuführung durch eine translatorische Bewegung insbesondere der Pulverzuführung an einem Arbeitskopf entsprechend angepasst, um optimale Verhältnisse für das Auftragschweißen zu erreichen.

Allein oder zusätzlich dazu kann mit den innerhalb des bestrahlten Bereichs erfassten Bildpunkten eine Mustererkennung durchgeführt werden. Dies kann bevorzugt unter Berücksichtigung eines optimalen Musters durchgeführt werden. Optimale Muster können beispielsweise bei Kalibrierungen bei erreichter guter insbesondere optimaler Justierung erhalten und in einem Speicher für die Mustererkennung und Auswertung abgelegt sein.

Eine elektronische Auswerteeinheit kann auch einen Speicher aufweisen, in dem Daten für einen Nachweis einer durchgeführten Justierung an einem Arbeitskopf mit der Erfindung abgespeichert und genutzt werden können.

Bei der Erfassung von Bildpunkten innerhalb des bestrahlten Bereichs kann die jeweilige Zeit (Belichtungszeit) bei der eine gleichzeitige Erfassung und dann auch Auswertung der mit dem Detektorarray erfassten Messsignale so ausgewählt werden, dass eine ausreichende Genauigkeit erreicht werden kann. Die jeweilige Zeitdauer für eine auswertbare Erfassung kann automatisch unter Berücksichtigung des Bildpunktes mit der größten im bestrahlten Bereich erfassten Intensität angepasst werden.

Während der Durchführung einer Justierung sollten alle Prozessparameter konstant gehalten oder sich ändernde Parameter berücksichtigt werden. Dies betrifft beispielsweise den Volumenstrom und/oder die Strömungsgeschwindigkeit eines Gasstromes der gemeinsam mit dem pulverförmigen Werkstoff durch die Pulverzuführung zugeführt werden kann. Dieser Gasstrom beeinflusst die Pulverförderung vorteilhaft und kann optional auch als Schutzgas wirken.

Der linienförmige Strahl sollte seine Ausrichtung während der Justierung, bis auf eine mögliche parallele Bewegung, die bereits erläutert wurde, nicht verändern. Dies trifft auch auf die Leistung mit der die den linienförmigen Strahl emittierende Strahlungsquelle sowie ggf. auf dazu eingesetzte strahlformende und strahlauslenkende Elemente zu.

Für die Emission eines linienförmigen Strahls kann vorteilhaft eine Laserstrahlungsquelle eingesetzt werden.

Zur Verringerung des erforderlichen Bauraums besteht die Möglichkeit, den linienförmigen Strahl auf ein den linienförmigen Strahl reflektierendes und diesen umlenkendes Element zu richten. Dabei wird der reflektierte linienförmige Strahl dann wie erläutert in den zu bestrahlenden Bereich, in dem die Partikel aufeinander treffen gerichtet.

Allein oder zusätzlich kann zwischen dem Detektorarray und dem bestrahlten Bereich aus dem die Messsignale mit dem Detektorarray erfasst werden, ebenfalls ein reflektierendes Element angeordnet sein, mit dem die Abbildung des bestrahlten Bereichs entsprechend umgelenkt und auf das entsprechend angeordnete und ausgerichtete Detektorarray gerichtet werden.

Das/die reflektierende Element(e) kann/können bevorzugt in einem 45 ° Winkel mit ihren reflektierenden Flächen an denen die Umlenkung erfolgt ausgerichtet sein.

Bekanntermaßen hat/haben eine oder mehrere Pulverdüse(n) einen wichtigen Einfluss auf das Prozessergebnis beim Pulverauftrag- insbesondere beim Laserpulverauftragschweißen (LPA). Eine Beurteilung der Partikelströmung nach Düsenaustritt ist bisher jedoch nur in eigenständigen Prüfanlagen möglich gewesen. Mit der Erfindung kann aber eine objektive und ggf. automatisierbare Vermessung der Pulverströmung in Bezug zur Position und Ausrichtung eines Energiestrahls innerhalb einer Bearbeitungsmaschine ermöglicht werden.

Eine weitere Störgröße im Bereich des Pulverauftragschweißens stellt die geometrische Abweichung der Achsen von Laserstrahlung und Partikelströmung dar. Für einen konstanten richtungsunabhängigen Pulverwerkstoffauftrag ist eine koaxiale Ausrichtung der Düse(n) zur Laseroptik oder einer mittleren Längsachse eines Energiestrahls notwendig, so dass das Pulver kegelförmig oder von zwei gegenüberliegenden Seiten in einen bestimmten Bereich unter den Einfluss der Energie- insbesondere von Laserstrahlung gelangen kann und dann für einen Werkstoffauftrag auf eine Oberfläche mit der Energie eines Energiestrahls aufgeschmolzen werden kann.

Bei aktuellen insbesondere LPA-Anlagen erfolgt diese Einstellung durch eine manuelle Einrichtung der sogenannten Verstelleinheit. Mit dem Ziel einer automatischen Ausrichtung konnte mit der Erfindung ein mechatronisches Justagesystem konzipiert und gefertigt werden, was eine regelbare Verstellung der Düsenposition(en) mit Pulverzuführung relativ zur mittleren Längsachse eines Energiestrahles, insbesondere der optischen Achse eines Laserstrahls ermöglicht. Es kann so eine fehlerhafte Ausrichtung der Pulverströmung in Bezug zur mittleren Längsachse eines Energiestrahles korrigiert werden, ohne dass ein subjektiver Einfluss erfolgt, wie dies bei der bisher durchgeführten manuellen Korrektur der Fall ist.

In Kombination mit einem Messsystem kann eine automatische Korrektur der Ausrichtung der in den Einflussbereich des Energiestrahls zugeführten Pulverströmung mittels mindestens einer Düse mittels Bildanalyse innerhalb der ermittelten Toleranzgrenzen durchgeführt werden.

Es besteht die Möglichkeit, gemäß von einem Anwender festzulegenden Kriterien eine Maximierung der Partikel-Strahl-Wechselwirkung, eine koaxiale Ausrichtung von Partikel- und Energiestrahl durch bildverarbeitende Algorithmen zu erreichen. Es kann eine automatisierte geometrische Ausrichtung von Partikeln zu einem Energiestrahl berechnet werden. Anschließend kann dann eine automatische oder manuelle Justage durch eine Verschiebeeinrichtung erreicht werden. Durch iterative Wiederholung kann die hohe Präzision noch weiter verbessert werden.

So kann eine in-situ Verschiebung der pulverapplizierenden Einrichtung (z.B. eine Bewegung einer oder mehrerer Düse(n) aus denen pulverförmiger Werkstoff austritt und in den Einflussbereich des Energiestrahls gelangt oder eine Anpassung der Querschnittsfläche des Energiestrahls durchgeführt werden.

Es ist eine Kalibrierung neuer Düsensysteme, eine Kompensation von Verschleiß pulverapplizierender Systeme möglich.

Die Erfindung kann auch für die Vermessung für Qualitätskontrolle/Verschleißkontrolle und Forschung durch vollautomatische Protokollierung der ermittelten Kennfelder, die werkstoff- und geometrieabhängige Charakterisierung der Energiestrahl-Partikel-Wechselwirkung zur Prozessentwicklung genutzt werden.

Nachfolgend soll die Erfindung beispielhaft näher erläutert werden.

Dabei zeigen:
Figur 1 in schematischer Form in einer Schnittdarstellung die Zuführung von pulverförmigen Werkstoff in einen Bereich, in dem Partikel des pulverförmigen Werkstoffs aus verschiedenen Richtung aus einer Düse oder zwei Düsen einer Pulverzuführung aufeinandertreffen, mit einem korrekt justierten Laserstrahl;
Figur 2 in schematischer Form in einer Schnittdarstellung die Zuführung von pulverförmigen Werkstoff in einen Bereich, in dem Partikel des pulverförmigen Werkstoffs aus verschiedenen Richtung aus einer Düse oder zwei Düsen einer Pulverzuführung aufeinandertreffen, mit einem nicht korrekt justierten Laserstrahl;

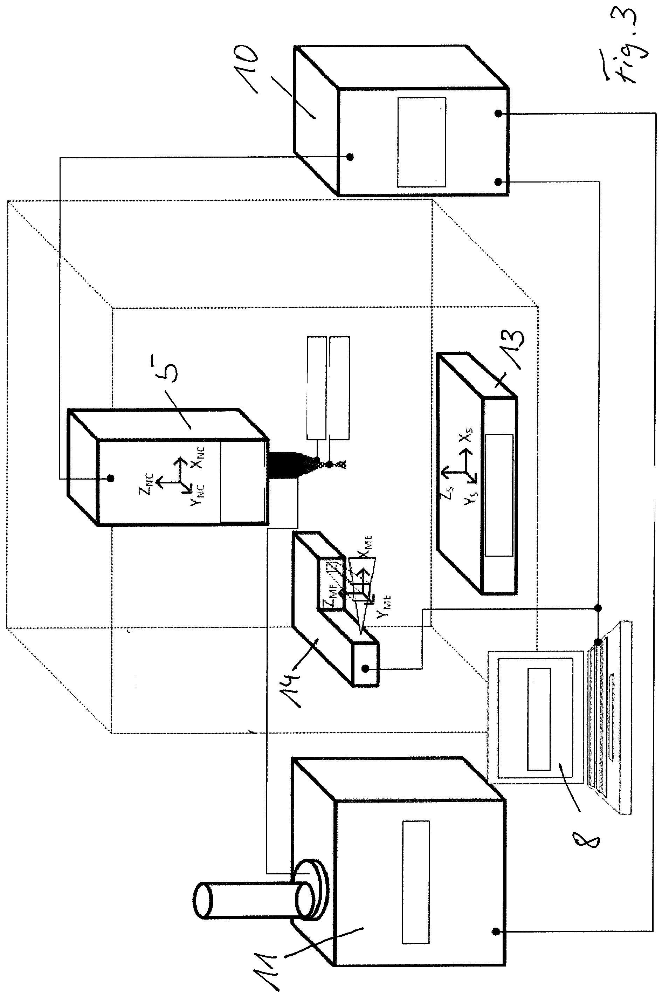

Figur 3 eine schematische Darstellung eines Beispiels eines Aufbaus, der zum Laserauftragschweißen und integrierter Messeinheit ausgebildet ist;

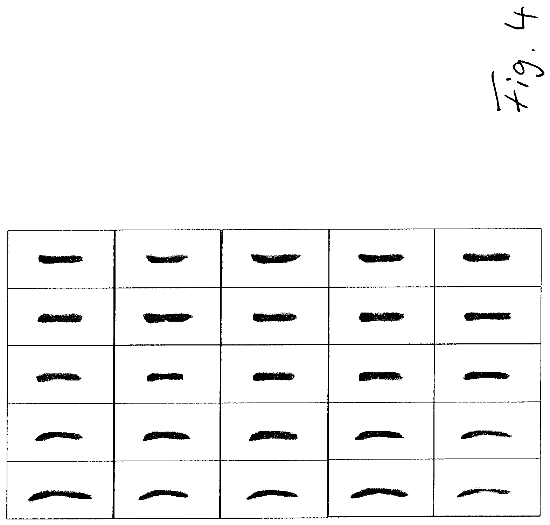

Figur 4 mit einem optischen Array erfasste Abbildungen eines Bereichs, in dem Partikel des pulverförmigen Werkstoffs aus verschiedenen Richtung aus einer Düse einer Pulverzuführung aufeinandertreffen, bei verschiedenen Ausrichtungen des zugeführten Pulverstromes in Bezug zu einem Laserstrahl und

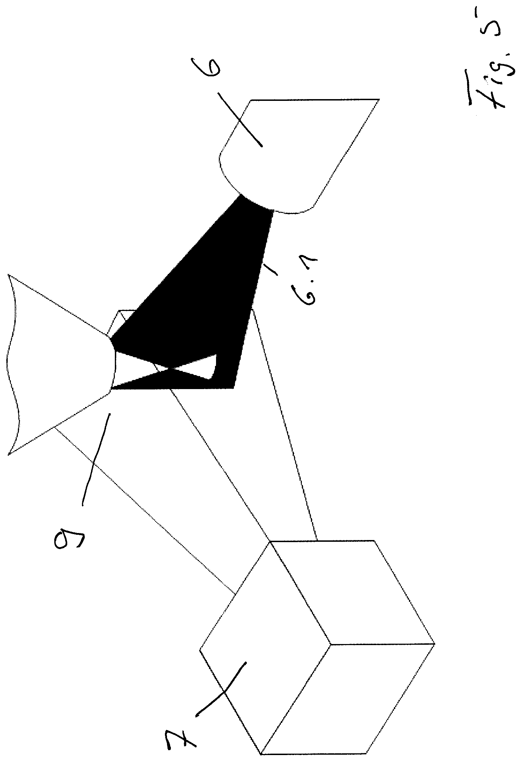

Figur 5 eine perspektivische Darstellung der Anordnung eines zweidimensionalen Detektorarrays, das einen Bereich, in dem Partikel des pulverförmigen Werkstoffs aus verschiedenen Richtung aus einer Düse einer Pulverzuführung aufeinandertreffen, erfassen kann und der Bereich mit einem linienförmigen Strahl beleuchtet ist.

In den Figuren 1 und 2 ist schematisch die Zuführung eines pulverförmigem Werkstoffs durch eine Ringspaltdüse 1, die sich konisch verjüngend in Richtung eines nicht dargestellten Werkstücks und dem Bereich 3 ausgebildet ist. Es könnte sich dabei aber auch um zwei sich gegenüberliegend angeordnete und in einem Winkel aufeinander zu geneigte Spaltdüsen handeln.

Die Ringspaltdüse 1 hat über ihre gesamte Länge eine konstante Spaltbreite. Der pulverförmige Werkstoff wird mit Unterstützung eines Gasstromes aus der Ringspaltdüse 1 in Richtung Werkstück beschleunigt. Dabei treffen Partikel, die aus dem Ringspalt 1 ausgetreten sind, in dem Bereich 3 aus verschiedenen Richtungen aufeinander und bewegen sich über einen bestimmten Weg zumindest nahezu parallel zueinander, bevor sich die Bewegungsrichtungen der Partikel divergent verändert. In dem Bereich 3 liegt auch die Wechselwirkungszone mit dem Laserstrahl als Beispiel für einen Energiestrahl 4. Seine optische bzw. seine mittlere Längsachse ist mit der Strich-Punkt-Linie verdeutlicht.

In der Wechselwirkungszone erwärmen sich die Partikel mittels der Energie des Laserstrahls und sie werden bei einem Werkstoffauftrag bei einem Auftragschweißprozess üblicherweise dort teilweise aufgeschmolzen. Der Bereich 3 in dem die Partikel aufeinander treffen, mit dem Laserstrahl wechselwirken und sich parallel zueinander bewegen ist oberhalb der Oberfläche auf der ein Werkstoffauftrag erfolgen soll angeordnet.

Figur 1 zeigt eine Ausrichtung von Laserstrahl und Pulverzuführung über die Ringspaltdüse 1 mit korrekter Justierung, bei der die optische Achse des Laserstrahls genau mittig durch den Bereich 3 geführt ist.

Bei dem in Figur 2 gezeigten Beispiel ist die optische Achse des Laserstrahls seitlich, in der Darstellung nach links verschoben, so dass sich unsymmetrische Verhältnisse im Bereich 3 und in der Wechselwirkungszone einstellen. Dies führt zu einer ungleichförmigen Erwärmung von Partikeln im Bereich 3 und dementsprechend zu einem ungleichförmigen Werkstoffauftrag auf der jeweiligen Oberfläche. Dadurch wird auch die Auftragsrate an Pulver pro Flächeneinheit reduziert. So kann ein Teil der Partikel, die in Figur 2 weiter rechts außen angeordnet sind, nicht ausreichend erwärmt und geschmolzen werden oder trifft nicht das Schmelzbad, so dass diese nicht für einen Werkstoffauftrag genutzt werden können oder eine unbefriedigende Auftragsqualität in Bereichen des aufgetragenen Werkstoffs zu verzeichnen ist.

Ein mit einem hier nicht dargestellten zweidimensionalen optischen Detektorarray erfasste Abbildung eines Bereichs 9 für eine korrekte Justierung von Laserstrahl zum zugeführten Pulverstrom ist in Figur 1 gesondert gezeigt, bei der symmetrische Verhältnisse eingehalten worden sind.

Ganz links in Figur 2 ist schematisch eine mit einem hier nicht dargestellten zweidimensionalen optischen Detektorarray erfassbare Abbildung eines Bereichs 9 für eine nicht korrekte Justierung von Laserstrahl zum zugeführten Pulverstrom gezeigt, bei der asymmetrische Verhältnisse eingehalten worden sind.

Figur 4 zeigt mit einer Kamera als optisches Detektorarray 7 real erfasste Abbildungen eines Bereiches 9, die mit einer elektronischen Auswerteinrichtung bewertet und für die Justierung genutzt werden können. So ist die ganz in der Mitte gezeigte erfasste Abbildung bei einer vollständig korrekten Justierung erhalten worden. Bei allen anderen erfassten Abbildungen traten mehr oder weniger Abweichungen von der optimalen Solljustierung auf, was man der Form, der Größe und/oder Länge in z-Achsrichtung entnehmen kann.

Bei nichtkorrekter Justierung können gekrümmte und/oder asymmetrische Abbildungen erfasst und bei der Auswertung berücksichtigt werden. Solche gekrümmten und/oder asymmetrischen Abbildungen kann man insbesondere in den beiden äußeren Spalten entnehmen.

Figur 3 zeigt in schematischer Form ein vollständiges Beispiel eines Aufbaus zum Laserpulverauftragschweißen mit einem Arbeitskopf 5 in dem optische Komponenten zur Formung eines Laserstrahles 4 und Schutzelemente für die optischen Komponenten (nicht dargestellt) aufgenommen sind. Der Arbeitskopf 5 kann zumindest in zwei Freiheitsgraden mittels einer elektronischen Steuerung 10 bewegt werden, um definierte Bereiche eines Werkstücks (nicht dargestellt), das auf einem Träger 13 angeordnet sein kann, zu beschichten. Aus einem Pulverförderer 11 wird pulverförmiger Werkstoff mittels einer Gasströmung über eine Leitung 12 dem Arbeitskopf und darin der Ringspaltdüse 1 zugeführt. Das Pulver tritt aus der Ringspaltdüse 1 aus, wie es in den Figuren 1 und 2 gezeigt ist.

Bei diesem Beispiel ist eine Messeinheit 14 vorhanden, in der das optische Detektorarray 7 und eine Strahlungsquelle 6 aufgenommen sind. Das optische Detektorarray 7 ist mit der elektronischen Auswerteeinheit 8 verbunden.

In der Messeinheit 14 ist die Strahlungsquelle 6 und ggf. ein reflektierendes Element so angeordnet, dass ein von der Strahlungsquelle 6 emittierter linienförmiger Strahl 6.1 in einen Bereich 9 gerichtet ist. Der linienförmige Strahl 6.1 ist in einer Ebene, die senkrecht zum linienförmigen Strahl (6.1) ausgerichtet ist, also in z-Achsrichtung bei einem kartesischen Koordinatensystem ausgerichtet.

Die sensitive Oberfläche des optischen Detektorarrays 7 ist in einer parallel dazu ausgerichteten Ebene ausgerichtet bzw. angeordnet. Dies ist nicht zwingend der Fall, wenn zwischen dem Bereich 9 und dem optischen Detektorarray 7 ein reflektierendes Element, wie es im allgemeinen Teil der Beschreibung beschrieben worden ist, im Strahlengang zwischen dem Bereich 9 und dem optischen Detektorarray 7 angeordnet ist. Ein reflektierendes Element kann auch zwischen dem Bereich 9 und der Strahlungsquelle 6 angeordnet sein. Dadurch kann der erforderliche Bauraum reduziert werden.

Vor dem optischen Detektorarray 8 kann ein Bandpassfilter, das für Wellenlängen zwischen 715 nm und 780 nm. transparent ist, angeordnet sein.

Der linienförmige Strahl 6.1 kann mit elektromagnetischer Strahlung einer Wellenlänge von 760 nm emittiert werden.

Der Laserstrahl 4 kann eine Wellenlänge von 1064 nm aufweisen. Während der Justierung wird er mit typischerweise maximal 15 % seiner normalen Betriebsleistung beim Laserauftragschweißen betrieben. Dies reicht aus um Partikel des pulverförmigen Werkstoffs die im Bereich 9 während der Erfassung einer Abbildung angeordnet sind, auf eine Temperatur zu erwärmen, so dass sie elektromagnetische Strahlung im Wellenlängenbereich in dem das Bandpassfilter transparent ist, emittieren und so mit dem optischen Detektorarray 7 eine ortsaufgelöste Erfassung von Bildpunkten, die dem Auflösungsvermögen des optischen Detektorarrays 7 entsprechen, möglich ist. Dabei werden lediglich Bildpunkte bei der Auswertung für die Justierung genutzt, die einen vorgebbaren Intensitätsschwellwert überschreiten.

Die mit dem optischen Detektorarray 7 erfassten Messsignale, die jeweils einer Abbildung entsprechen, werden der elektronischen Auswerteeinheit 8 zugeführt.

In nicht dargestellter Form kann die Erfassung von Abbildungen des Bereichs 9 sukzessive erfolgen und dabei eine translatorische Relativbewegung zwischen Arbeitskopf 5 und Strahlungsquelle 6 bzw. der Messeinheit 14 erfolgen. Sie können translatorisch relativ zueinander bewegt werden. Dabei wird der linienförmige Strahl 6.1 senkrecht zu seiner Strahlungsrichtung bewegt und durchdringt dabei den gesamten Bereich 9 von einer Seite bis zu einer gegenüberliegenden Seite. So kann auf jeden Fall das Zentrum des Bereichs 9 bestrahlt werden, in dem der Bereich in dieser Ebene seine kleinste Ausdehnung aufweist. Zumindest die Abbildung des Bereichs 9, die im Zentrum des Bereichs 9 mit dem optischen Detektorarray 7 erfasst worden ist, sollte bei der Auswertung für die Justierung herangezogen werden.

In Figur 3 ist auf die Darstellung einer Einrichtung zur zweidimensionalen Ausrichtung der Pulverzuführung in Bezug zur mittleren Längsachse des Laserstrahls 4 verzichtet worden. Diese kann am Arbeitskopf 5 angeordnet und wie im allgemeinen Teil der Beschreibung ausgebildet sein und bei der Justierung auch so betrieben werden.

Mit Figur 5 soll die Bestrahlung des Bereichs 9 und die Erfassung von Messsignalen mit dem optischen Detektorarray 7 verdeutlicht werden. Der linienförmige Strahl 6.1 wird von einer Strahlungsquelle 6, insbesondere einer Laserstrahlungsquelle emittiert und parallel zur z-Achse ausgerichtet in den Bereich 9 gestrahlt. Mit dem optischen Detektor 7 dessen sensitive Oberfläche parallel zur Emissionsrichtung des linienförmigen Strahls 6.1 ausgerichtet ist, wird die Abbildung des Bereichs 9 ortsaufgelöst erfasst und die ortsaufgelöst erfassten Messsignale werden dann vom optischen Detektor 7 an die elektronische Auswerteeinheit 8 übertragen, in der die Auswertung für die Justierung, wie im allgemeinen Teil der Beschreibung erläutert, durchgeführt werden kann.

## Patentansprüche

1. Anordnung zur Justierung einer Pulverströmung in Bezug zur mittleren Längsachse eines Energiestrahls für einen Arbeitskopf, der zum Pulverauftragsschweißen ausgebildet ist, wobei
die Pulverströmung mittels einer an der einem Werkstück zugewandten Seite des Arbeitskopfes (5) angeordneten Pulverzuführung, die mit einer konisch in Richtung Werkstück ausgebildeten Ringspaltdüse (1), mehreren ringförmig angeordneten Düsen oder mindestens zwei sich gegenüberliegend angeordnete in einem Winkel geneigt und mit ihrer Austrittsöffnung zueinander weisende Düsen gebildet und so ausgebildet ist, dass die Partikel des pulverförmigen Werkstoffs (2) aus mehreren Richtungen in einem spitzen Winkel in einem Bereich (3), der
oberhalb einer Oberfläche angeordnet ist, auf der mit der Energie des Energiestrahls (4) geschmolzener pulverförmiger Werkstoff aufgebracht werden soll, aufeinandertreffen und
der Energiestrahl (4) auf die Ebene auf die der geschmolzene pulverförmige Werkstoff aufgebracht werden soll, gerichtet ist und
von einer Strahlungsquelle (6) elektromagnetische Strahlung von einer Seite auf den Bereich (3), in dem die Partikel des pulverförmigen Werkstoffs aufeinander treffen, als linienförmiger Strahl (6.1) gerichtet ist und
in einer Ebene, die senkrecht zum linienförmigen Strahl (6.1) ausgerichtet ist, ein optisches zweidimensionales Detektorarray (7) angeordnet ist, wobei
das optische Detektorarray (7) zur ortsaufgeösten Erfassung von Intensitäten elektromagnetischer Strahlung ausgebildet und an eine elektronische Auswerteeinheit (8) angeschlossen ist, **dadurch gekennzeichnet, dass**
die elektronische Auswerteeinheit (8) zur Bestimmung der Form, Größe und/oder Länge eines bestrahlten Bereiches (9) ausgebildet ist, in dem ortsaufgelöst Intensitäten, die einen vorgebbaren Schwellwert überschreiten mit dem optischen Detektorarray (7) erfasst worden sind und dabei
der bestrahlte Bereich (9) ausgehend von den Oberflächen von Partikeln des pulverförmigen Werkstoffs auf die der Energiestrahl (4), der mit reduzierter Leistung bei der Justierung betrieben ist, auftrifft, bis in einen Teilbereich des bestrahlten Bereichs (9), der in Richtung einer Werkstückoberfläche beschleunigten pulverförmigen Partikel angeordnet ist, in dem sich die mit dem Energiestrahl (4) erwärmten Partikel divergent bewegen, reicht, wobei
der Energiestrahl (4) während der Justierung mit gegenüber der beim Pulverauftragsschweißen eingesetzten reduzierter Leistung betreibbar ist, die ausreicht Partikel in einer Wechselwirkungszone mit dem Energiestrahl (4) zu erwärmen aber ein Schmelzen der Partikel des pulverförmigen Werkstoffs vermieden ist und
am Arbeitskopf (5) eine Einrichtung zur zwei- oder dreidimensionalen Ausrichtung der Pulverzuführung in Bezug zur mittleren Längsachse des Energiestrahls (4) in einer senkrecht zur mittleren Längsachse des Energiestrahls (4) ausgerichteten Ebene vorhanden ist.

2. Anordnung nach Anspruch 1, **dadurch gekennzeichnet, dass** die Strahlungsquelle (6) elektromagnetische Strahlung in einem Wellenlängenintervall emittiert und/oder zwischen dem bestrahlten Bereich (9) und dem Detektorarray (7) ein Bandpassfilter, das für ein Wellenlängenintervall transparent ist, angeordnet ist.

3. Anordnung nach einem der vorhergehenden Ansprüche, **dadurch gekennzeichnet, dass** der Energiestrahl ein Laserstrahl (4) ist.

4. Anordnung nach einem der vorhergehenden Ansprüche, **dadurch gekennzeichnet, dass** das Bandpassfilter im Bereich 700 nm bis 1200 nm transparent ist.

5. Anordnung nach dem vorhergehenden Anspruch, **dadurch gekennzeichnet, dass** die Wellenlänge eines Laserstrahls, der als Energiestrahl (4) eingesetzt ist, außerhalb des Wellenlängenintervalls liegt und die Wellenlänge(n) des linienförmigen Strahls (6.1) innerhalb des Wellenlängenintervalls liegt/liegen.

6. Anordnung nach einem der vorhergehenden Ansprüche, **dadurch gekennzeichnet, dass** die Strahlungsquelle (6) mit dem linienförmigen Strahl (6.1) parallel zur Ebene in der das Detektorarray (7) angeordnet ist, bewegbar ist.

7. Anordnung nach einem der vorhergehenden Ansprüche, **dadurch gekennzeichnet, dass** die elektronische Auswerteeinheit (8) eine optische und/oder akustische Anzeigeeinheit, die für eine manuelle Justierung mit der Einrichtung zur zweidimensionalen Ausrichtung der Pulverzuführung nutzbar ist und/oder die elektronische Auswerteeinheit (8) so ausgebildet ist, dass eine geregelte automatische Justierung der Einrichtung zur zweidimensionalen Ausrichtung der Pulverzuführung erreichbar ist.

8. Anordnung nach einem der vorhergehenden Ansprüche, **dadurch gekennzeichnet, dass** die Einrichtung zur zweidimensionalen Ausrichtung der Pulverzuführung in Bezug zur mittleren Längsachse des Energiestrahls (4) mit zwei unabhängig voneinander in zwei senkrecht zueinander ausgerichtete Richtungen bewegbaren Plattformen gebildet ist, an denen die Pulverzuführung und/oder
eine den Energiestrahl (4) parallel zu seiner mittleren Längsachse verschiebende Optik fixiert ist und/oder eine Einrichtung zur dreidimensionalen Ausrichtung der Pulverzuführung in Bezug zur mittleren Längsachse des Energiestrahls (4) eine zusätzliche senkrecht zu den bewegbaren Plattformen ausgerichtete Bewegungsmöglichkeit aufweist.

9. Anordnung nach dem vorhergehenden Anspruch, **dadurch gekennzeichnet, dass** die zwei Plattformen jeweils mit einem Antrieb bewegbar und von der elektronischen Auswerteeinheit (8) ansteuerbar sind.

10. Anordnung nach dem vorhergehenden Anspruch, **dadurch gekennzeichnet, dass** die zwei Plattformen mit einem Linearantrieb bewegbar sind.

11. Anordnung nach dem vorhergehenden Anspruch, **dadurch gekennzeichnet, dass** die zwei Plattformen mit einem Schrittmotor bewegbar sind.

## Claims

1. An arrangement for adjusting a powder flow in relation to the central longitudinal axis of an energy beam, in particular of a laser beam for a working head which is designed for powder deposition welding, wherein
the powder flow is formed by means of a powder feed that is arranged on the side of the working head (5) that faces a workpiece and is formed with an annular gap nozzle (1), which is embodied to be conical in the direction of the workpiece, with a plurality of annularly arranged nozzles or with at least two oppositely arranged nozzles, which are inclined at an angle and the exit openings of which face one another, and is designed such that the particles of the powdery material (2) meet from several directions at an acute angle in a region (3) which
is arranged above a surface on which powdery material melted with the energy of the energy beam (4) is to be deposited, and
the energy beam (4) is aligned with respect to the plane on which the molten powdery material is to be deposited, and
starting from a radiation source (6), electromagnetic radiation is directed as a linear beam (6.1) from a side onto the region (3) in which the particles of the powdery material meet, and
an optical two-dimensional detector array (7) is arranged in a plane that is oriented perpendicular to the linear beam (6.1), wherein
the optical detector array (7) is designed for spatially resolved capturing of intensities of electromagnetic radiation and is connected to an electronic evaluation unit (8),
**characterized in that**
the electronic evaluation unit (8) is designed for ascertaining the shape, size and/or length of an irradiated region (9) in which intensities that exceed a specifiable threshold value have been captured with the optical detector array (7) in a spatially resolved manner and, in the process,
the irradiated region (9) extends from the surfaces of particles of the powdery material on which the energy beam (4), which is operated with reduced power during the adjustment, impinges up to a partial region of the irradiated region (9) that is arranged in the direction of powdery particles accelerated towards a workpiece surface, in which the particles heated by the energy beam (4) move divergently, wherein
the energy beam (4) is able to be operated during the adjustment with a reduced power compared to that used in the powder deposition welding, which is sufficient to heat particles in an interaction zone with the energy beam (4) but a melting of the particles of the powdery material is avoided, and
a device for two-dimensional or three-dimensional alignment of the powder feed in relation to the central longitudinal axis of the energy beam (4) is provided at the working head (5) in a plane oriented perpendicular to the central longitudinal axis of the energy beam (4).

2. The arrangement as claimed in claim 1, **characterized in that** the radiation source (6) emits electromagnetic radiation in a wavelength interval and/or a bandpass filter that is transparent for a wavelength interval is arranged between the irradiated region (9) and the detector array (7).

3. The arrangement as claimed in one of the preceding claims, **characterized in that** the energy beam is a laser beam (4).

4. The arrangement as claimed in one of the preceding claims, **characterized in that** the bandpass filter is transparent in the range from 700 nm to 1200 nm.

5. The arrangement as claimed in the preceding claim, **characterized in that** the wavelength of a laser beam that is used as an energy beam (4) lies outside said wavelength interval and the wavelength(s) of the linear beam (6.1) lie/lies within the wavelength interval.

6. The arrangement as claimed in one of the preceding claims, **characterized in that** the radiation source (6) with the linear beam (6.1) is movable parallel to the plane in which the detector array (7) is arranged.

7. The arrangement as claimed in one of the preceding claims, **characterized in that** the electronic evaluation unit (8) an optical and/or acoustic indication unit that is able to be used for manual adjustment with the device for the two-dimensional alignment of the powder feed and/or the electronic evaluation unit (8) is designed such that a controlled, automated adjustment of the device for the two-dimensional alignment of the powder feed can be obtained.

8. The arrangement as claimed in one of the preceding claims, **characterized in that** the device for the two-dimensional alignment of the powder feed in relation to the central longitudinal axis of the energy beam (4) is formed with two platforms that are movable independently of one another in two directions aligned perpendicularly to one another and to which the powder feed and/or
an optical unit displacing the energy beam (4) parallel to its central longitudinal axis is fixed and/or a
device for the three-dimensional alignment of the powder feed in relation to the central longitudinal axis of the energy beam (4) has an additional movement possibility oriented perpendicular to the movable platforms.

9. The arrangement as claimed in the preceding claim, **characterized in that** the two platforms are each movable with a drive, preferably a linear drive and particularly preferably with a stepper motor, and are controllable by the electronic evaluation unit (8).

10. The arrangement as claimed in the preceding claim, **characterized in that** the two platforms are movable with a linear drive.

11. The arrangement as claimed in the preceding claim, **characterized in that** the two platforms are movable with a stepper motor.

## Revendications

1. Dispositif permettant d'ajuster un écoulement de poudre par rapport à l'axe longitudinal central d'un faisceau d'énergie pour une tête de travail conçue pour le soudage par dépôt de poudre, dans lequel
l'écoulement de poudre est formé au moyen d'une alimentation de poudre agencée du côté de la tête de travail (5) qui fait face à une pièce à usiner et constituée d'une buse annulaire (1) conique en direction de la pièce à usiner, de plusieurs buses agencées en cercle ou d'au moins deux buses agencées face à face en formant un certain angle et dont les orifices de sortie sont orientés l'un vers l'autre, et conçue de sorte que les particules du matériau en poudre (2) arrivent de plusieurs directions, en formant un angle aigu, dans une région (3)
située au-dessus d'une surface sur laquelle un matériau en poudre fondu grâce à l'énergie du faisceau d'énergie (4) doit être appliqué, et
le faisceau d'énergie (4) est dirigé vers le plan sur lequel le matériau en poudre fondu doit être appliqué et
un rayonnement électromagnétique provenant d'une source de rayonnement (6) est dirigé, sous la forme d'un faisceau linéaire (6.1), depuis un côté vers la région (3) dans laquelle arrivent les particules du matériau en poudre et
un réseau de détecteurs optiques bidimensionnels (7) est agencé dans un plan orienté perpendiculairement au faisceau linéaire (6.1), dans lequel
le réseau de détecteurs optiques (7) est conçu pour la détection spatialement résolue des intensités de rayonnement électromagnétique et est connecté à une unité d'évaluation électronique (8),
**caractérisé en ce que**
l'unité d'évaluation électronique (8) est conçue pour déterminer la forme, la taille et/ou la longueur d'une région irradiée (9) au sein de laquelle des intensités spatialement résolues dépassant un seuil prédéfini ont été détectées par le réseau de détecteurs optiques (7), et ainsi
la région irradiée (9) s'étend depuis les surfaces des particules du matériau en poudre, sur lesquelles arrive le faisceau d'énergie (4) fonctionnant à puissance réduite lors de l'ajustement, jusqu'à une sous-région de la région irradiée (9), située en direction d'une surface de pièce à usiner où les particules pulvérulentes sont accélérées, au sein de laquelle les particules échauffées par le faisceau d'énergie (4) se déplacent de manière divergente, dans lequel
le faisceau d'énergie (4) peut être utilisé pendant l'ajustement avec une puissance réduite par rapport à celle utilisée lors du soudage par dépôt de poudre, ce qui est suffisant pour chauffer les particules dans une région d'interaction avec le faisceau d'énergie (4) mais évite la fusion des particules du matériau en poudre et
un dispositif d'alignement bidimensionnel ou tridimensionnel de l'alimentation en poudre par rapport à l'axe longitudinal central du faisceau d'énergie (4) dans un plan perpendiculaire à l'axe longitudinal central du faisceau d'énergie (4) est présent au niveau de la tête de travail (5).

2. Dispositif selon la revendication 1, **caractérisé en ce que** la source de rayonnement (6) émet un rayonnement électromagnétique dans une plage de longueur d'onde et/ou un filtre passe-bande transparent pour une plage de longueur d'onde est agencé entre la région irradiée (9) et le réseau de détecteurs (7).

3. Dispositif selon l'une quelconque des revendications précédentes, **caractérisé en ce que** le faisceau d'énergie est un faisceau laser (4).

4. Dispositif selon l'une quelconque des revendications précédentes, **caractérisé en ce que** le filtre passe-bande est transparent dans la plage comprise entre 700 nm et 1200 nm.

5. Dispositif selon la revendication précédente, **caractérisé en ce que** la longueur d'onde d'un faisceau laser utilisé comme faisceau d'énergie (4) se situe en dehors de la plage de longueur d'onde et **en ce que** la ou les longueur(s) d'onde du faisceau linéaire (6.1) se situe(nt) dans la plage de longueur d'onde.

6. Dispositif selon l'une quelconque des revendications précédentes, **caractérisé en ce que** la source de rayonnement (6), ainsi que le faisceau linéaire (6.1), peut être déplacée parallèlement au plan dans lequel est agencé le réseau de détecteurs (7).

7. Dispositif selon l'une quelconque des revendications précédentes, **caractérisé en ce que** l'unité d'évaluation électronique (8) comprend une unité d'affichage optique et/ou acoustique qui peut être utilisée pour un ajustement manuel avec le dispositif d'alignement bidimensionnel de l'alimentation en poudre et/ou l'unité d'évaluation électronique (8) est conçue de sorte qu'un ajustement automatique régulé du dispositif d'alignement bidimensionnel de l'alimentation en poudre est possible.

8. Dispositif selon l'une quelconque des revendications précédentes, **caractérisé en ce que** le dispositif d'alignement bidimensionnel de l'alimentation en poudre par rapport à l'axe longitudinal central du faisceau d'énergie (4) est constitué de deux plateformes pouvant être déplacées indépendamment l'une de l'autre dans deux directions perpendiculaires l'une à l'autre,
au niveau desquelles l'alimentation en poudre et/ou
un dispositif optique qui décale le faisceau d'énergie (4) parallèlement à son axe longitudinal central est/sont immobilisé(s) et/ou un
dispositif d'alignement tridimensionnel de l'alimentation en poudre par rapport à l'axe longitudinal central du faisceau d'énergie (4) présente une capacité de déplacement supplémentaire orientée perpendiculairement aux plateformes mobiles.

9. Dispositif selon la revendication précédente, **caractérisé en ce que** les deux plateformes peuvent être déplacées respectivement par un entraînement et peuvent être commandées par l'unité d'évaluation électronique (8).

10. Dispositif selon la revendication précédente, **caractérisé en ce que** les deux plateformes peuvent être déplacées au moyen d'un entraînement linéaire.

11. Dispositif selon la revendication précédente, **caractérisé en ce que** les deux plateformes peuvent être déplacées au moyen d'un moteur pas à pas.
